(19)

Europäisches
Patentamt
European
Patent Office
Office européen
des brevets

(11) **EP 1 849 988 B1**

(12) **EUROPEAN PATENT SPECIFICATION**

(45) Date of publication and mention
of the grant of the patent:
**15.07.2015 Bulletin 2015/29**

(51) Int Cl.:
*F02M 21/02* *(2006.01)*   *F02D 19/02* *(2006.01)*

(21) Application number: **07106884.5**

(22) Date of filing: **24.04.2007**

(54) **Method and group for the LPG feeding of an internal combustion engine**

Verfahren und Gruppe zur Zuführung von LPG für einen Verbrennungsmotor

Procédé et groupe pour l'alimentation en GPL d'un moteur à combustion interne

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **26.04.2006  IT TO20060304**

(43) Date of publication of application:
**31.10.2007  Bulletin 2007/44**

(73) Proprietor: **M.T.M. S.r.l.**
**12062 Cherasco (IT)**

(72) Inventor: **CERATTO, Danilo**
**12051, ALBA (IT)**

(74) Representative: **Bergadano, Mirko et al**
**Studio Torta S.p.A.**
**Via Viotti, 9**
**10121 Torino (IT)**

(56) References cited:
**WO-A1-01/59537**     **WO-A2-2005/038227**
**GB-A- 2 135 729**     **JP-A- 2003 090 237**
**JP-A- 2003 239 785**   **US-A- 5 010 868**
**US-A1- 2001 003 977**  **US-A1- 2003 230 249**

**Description**

The present invention relates to a method for feeding LPG to an internal combustion engine.

The LPG feeding system for an internal combustion engine usually involves the use of feeding devices comprising a tank containing LPG (part in liquid and part in gaseous state), a reducer/vaporizer assembly normally heated by means of the engine cooling liquid, and two separate gas feeding systems both connected to the tank in different points to take, one, the gaseous LPG and, the other, the liquid LPG. The known feeding devices further comprise a selector assembly to activate the feeding system for the gaseous LPG when the cooling liquid temperature is lower than a determined threshold value and to activate the feeding system for the liquid LPG as soon as the cooling liquid temperature exceeds the above threshold value. In other words, the selector assembly controls the switch from the gaseous to liquid feeding as soon as the cooling liquid is able to supply the necessary thermic energy for the vaporization of the liquid LPG.

The known feeding devices as described before, even if used, are complex under the manufacturing point of view especially for the two distinct gas feeding systems and the selector assembly.

The aim of the present invention is to give a method for feeding LPG to an internal combustion engine, that is able to easily and economically solve the above described problems and that allows at the same time the engine to operate with maximum performances in any operating conditions.

WO 01/59537 A1 discloses a gas regulator for regulating the pressure of a gas flowing from a source of the gas under pressure to a device for using the gas. A high speed solenoid actuator is operated by a controller for controllably varying the output pressure as desired. In JP2003-2397875, which corresponds to the preamble of claim 1, a regulator is heated to maintain the gaseous phase of the fuel.

According to the present invention, a method for feeding LPG to an internal combustion engine is provided, as claimed in claim 1.

Moreover, the present invention refers to an assembly for feeding LPG to an internal combustion engine according to claim 9.

The invention will be described with reference to the attached drawings indicating a non limitative embodiment, where:

- figure 1 is a block scheme for a preferred embodiment of an assembly for feeding LPG to an engine;
- figure 2 shows, schematically and in section, a detail of figure 1 assembly; and
- figures 3 to 5 are graphics indicating some significant variables during the operation of figure 1 assembly.

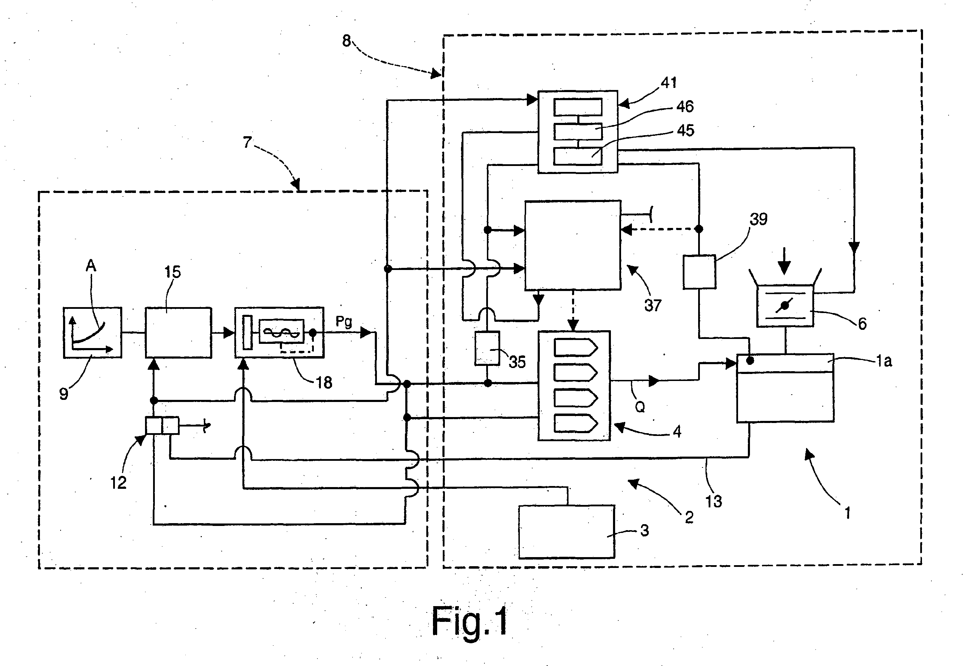

In figure 1, with reference 1 is indicated, as a whole, an internal combustion engine of a vehicle (not shown), preferably a goods moving vehicle, such as for example a forklift that will be referred to in this description without anyway losing the general aspect.

The engine 1 is designed to use gaseous LPG only and is fed by a feeding assembly 2 comprising a tank 3 from which the LPG is taken out in liquid state, one or more injectors 4 of known type and schematically illustrated, suitable to supply an effective gas flowrate Qg into a chamber 1a of the engine 1. An air flowrate is also fed in the chamber 1a and is controlled by a throttle adjusting device of known type, indicated with reference number 6. Again with reference to figure 1, assembly 2 further comprises a device 7 for controlling pressure of LPG fed to the injectors 4, and a device 8 for controlling the flowrate of LPG supplied by injectors 4 themselves according to the pressure and temperature of LPG at the inlet of injectors 4 and according to operating conditions of engine 1, as better explained later on.

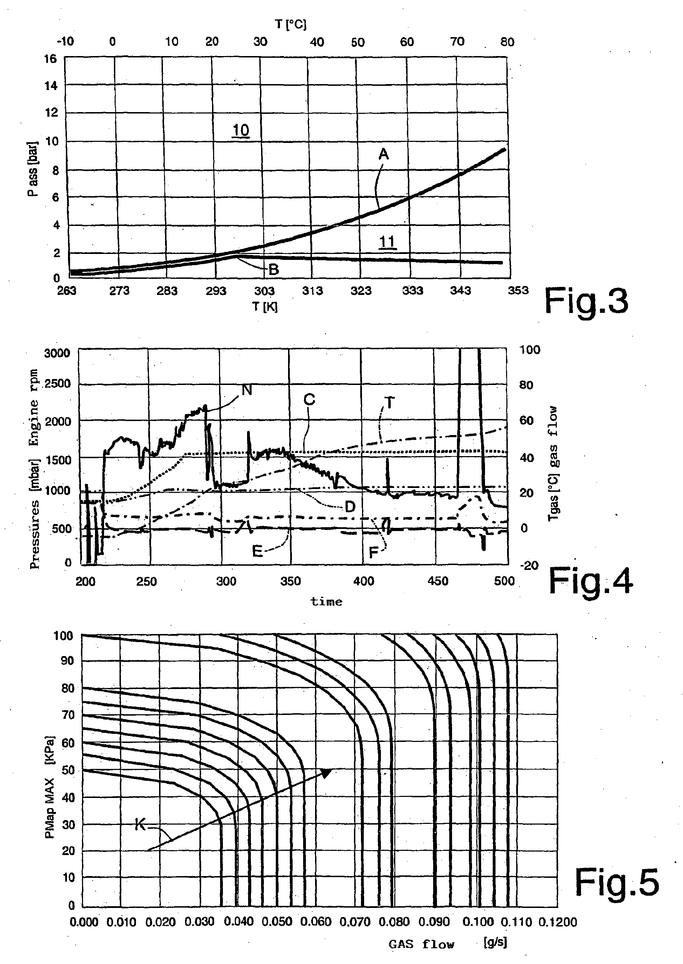

The device 7 comprises a memory block 9, in which a LPG pressure/temperature limit curve has been stored. Such limit curve is indicated as A in figure 3. As shown in graphic of figure 3, the limit curve A separates an area 10 where LPG is in a liquid state from an area 11 where LPG is in a gaseous state.

The device 7 also comprises a determination block 12 to determine the temperature of LPG fed to injectors 4. In the disclosed example, the block 12 is able to determine the above mentioned temperature both by directly detecting it upstream of injectors 4 and/or in the injectors themselves. Line T in figure 4 indicates an approximate progression of the LPG temperature variation versus time, starting from the vehicle ignition, and with an engine rpm variation represented by curve N. Block 9 and 12 are connected to a block 15, that is part of device 7 and is able to determine a gas pressure threshold value for each temperature value received by block 12. In order to supply LPG in gaseous state, the above threshold value is reduced by block 15 itself by using a variable safety correction factor to obtain an optimal maximum pressure value for safety operation for each temperature value.

In the preferred example, the operation optimal maximum pressure values define part of line B in figure 3.

With reference to figure 1, the device 7 further comprise a comparison and adjustment block 18 suitable to control the pressure of LPG fed to injectors 4 so that at each moment it is substantially the same as the determined optimal maximum pressure.

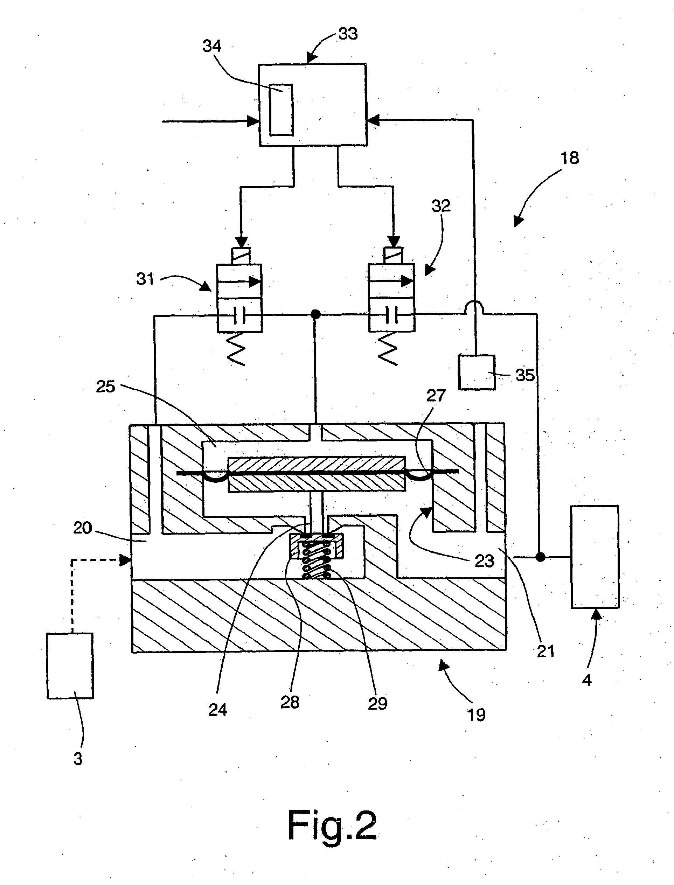

According to what shown in particular in figure 2, the block 18 comprises a valve 19 for interception/ pressure reduction, which has an inlet 20 connected to the LPG tank 3 or to a different pressurized space, and on outlet 21 connected to injectors 4 and in turn comprising a chamber 23 connected to outlet 21 and connected to inlet 20 through a passage 24. The valve 19 further comprises a chamber 25 separated in fluid-tight manner from chamber 23 by a flexible diaphragm 27, and a shutter 28 which is carried by diaphragm 27 and moves under the action of diaphragm 27 and of a spring 29 between a closing position (illustrated in figure 2), in which it seals the chamber 23 from the inlet 20 by closing the passage 24, and an opening position, in which it allows LPG flow between the inlet 20 and the chamber 23.

Again with reference to figure 2, the block 18 further comprises a mono-stable adjusting solenoid valve 31, normally closed and having an inlet connected to inlet 20 and an outlet communicating with chamber 25. Chamber 25 is connected to the inlet of another mono-stable and normally closed adjusting solenoid valve 32, whose outlet is connected to outlet 21. Solenoid valves 31 and 32 are controlled and selectively activated by an unit 33 connected to a pressure sensor 35 associated to outlet 21 to receive the actual pressure value of the LPG fed to injectors 4, and connected to the block 15 to receive the corresponding optimal maximum pressure value. The unit 33 comprises a comparing block 34 that, after the comparison of the received two pressure values, sends a difference value signal according to which the unit 33 activates one or the other of the solenoid valves 31, 32. The trend versus time of the LPG actual pressure is represented by curve C in figure 4 by way of example only.

Again with reference to figure 1, injectors 4 are controlled by an unit 37 to supply an optimal LPG flowrate to engine 1. In the preferred described embodiment, the gas flowrate versus time is indicated by curve F of figure 4.

The unit 37 is part of the device 8, that comprises the sensor 35 and a further pressure sensor 39. Sensors 35 and 39 are able to send, to unit 37, a signal corresponding to the actual pressure of the LPG fed to injectors 4 and, respectively, a signal corresponding to the pressure in chamber 1a, normally known as Pmap.

According to the two received signals, and particularly to the ratio between the two signal, according to the injectors manufacturing features and according to the determined temperature, the unit 37 controls the opening degree and the opening time of injectors 4 so that the engine 1 is always fed with the required LPG flowrate. Moreover, again with reference to figure 1, the device 8 further comprises a unit 41 to reduce the pressure inside the chamber 1a during given operating conditions. Particularly, the unit 41 comprises a memory block, in which a plurality of Pmap pressure maximum values in chamber 1a is memorized. All those values for the maximum pressure define the curve D in figure 4. The maximum pressure values are numerically determined according to the actual pressure values of LPG entering the injectors 4, to the injectors dimension features, to the value of the LPG flowrate fed into the chamber 1a of the engine 1 determined by the unit 37 and to the determined LPG temperature. Conveniently, the unit 41 determines, for each operating instant, the value of the maximum pressure value that is acceptable in the chamber 1a on the basis of the graph in figure 5 indicating the value of the maximum pressure in chamber 1a according to gas flowrate and to the change in pressure and temperature of the LPG entering the injectors 4. The graph in figure 5 indicates some curves only: each one is an isobaric curve corresponding to a determined value of the LPG pressure entering the injectors 4 and to a determined temperature value. Curves are arranged according to increasing pressure in the direction indicated by the arrow K in figure 5.

A mathematics relation linking the pressure in chamber 1a, the gas actual pressure and temperature, the injectors features and the gas flowrate is the following:

$$Qg = \frac{S \cdot Pg}{\sqrt{RT}} \cdot \sqrt{2 \cdot \frac{k}{k-1} \cdot \left[ \left( \frac{Pmap}{Pg} \right)^{\frac{2}{k}} - \left( \frac{Pmap}{Pg} \right)^{\frac{k+1}{k}} \right]}$$

where Pg indicates the gas actual pressure detected by the sensor 38, Pmap indicates the pressure in the chamber 1a detected by the sensor 39, Qg indicates the LPG flowrate fed to the engine, S indicates the equivalent cross-section of the nozzles, R and T are the elasticity constant and, respectively, the gas temperature, and k is the exponent of the gas expansion polytropic. Once the variables are fixed, from the previous mathematics relation, the maximum pressure in chamber 1a making the injectors supply the required gas flow is calculated.

Moreover, the unit 41 comprises a comparing block 45 that compares the instantaneous value of the pressure in chamber 1a with a correspondent calculated maximum value and, when the detected pressure value exceeds the calculated one, it sends a signal to a control block 45 controlling the throttle device 6, in order to reduce the pressure inside the chamber 1a below the calculated maximum value and, consequently, the engine power. During controlled operations, the values of the pressure inside chamber 1a define part of the curve E of figure 4.

The operation of assembly 2 from the start up of the engine 1 will be described referring to figure 1 and to the graphs of figure 3-5. When starting the engine 1 and in a plurality of following instants, till reaching a steady condition, the block 12 determines the temperature of gas fed to injectors 4, while sensors 35 and 39 detect the pressure of the LPG at the inlet of the injectors 4 and in the chamber 1a of the engine. In each operation instant or at least for part of them, the block 12 sends a temperature value to block 15. Block 15, referring to the curve A stored in block 9, determines the optimal maximum pressure value of the LPG so that the LPG still remains in gaseous state. This optimal maximum pressure value is obtained by taking a pressure threshold value on curve A and by reducing it by means of a variable safety correction factor to obtain a series of optimal maximum pressure values defining line B in figure 3. In each instant, the block 18 adjusts the actual pressure of gas fed to the injectors, by leading such actual pressure to a value close to the correspondent optimal maximum pressure value. The adjustment is carried out as follow: the sensor 35 detects the LPG actual pressure at the outlet 21 and sends the detected actual pressure to the unit 33, that compares it with the determined maximum pressure value. If the detected actual pressure is higher than the correspondent optimal maximum pressure value, the unit 33 activates the solenoid valve 32 to connect the chamber 25 to the outlet 21. By doing this, the pressure inside the chamber 25 decreases till being equal to the pressure in chamber 21. Because of the pressure difference on the diaphragm 27 and because of the spring 29, the shutter 8 is moved into the closing position, therefore causing a pressure decrease. On the other hand, when the pressure at the outlet 21 is lower than the correspondent optimal maximum pressure value, the unit 33 activates the solenoid valve 31 to increase the pressure in the chamber 25 and therefore, thanks to the higher pressure difference on the diaphragm 27, to move the shutter into the opening position, therefore causing a pressure increase. By doing this, the LPG actual pressure at the outlet 21 fluctuates around the determined optimal maximum value, without significantly departing from such value.

In each of the described operation instants, the sensors 35 and 39 detect the pressure values and send them to the unit 37 that, also according to the temperature, adjusts the timing and the opening degree of the injectors, so as to supply the required LPG flowrate. The physical limit of the gas flowrate through the injectors 4, when they work in sub-critical conditions, is managed by unit 41 that, according to the pressure in the engine chamber 1a, to the LPG actual pressure, to the gas flowrate supplied by the injectors and to the gas temperature, determines for at least part of the operating instants an acceptable maximum pressure value inside chamber 1a. When the pressure in the chamber 1a exceeds this value, the unit 41 acts on the throttle adjusting device 6, controlling the pressure value in chamber 1a, and controls the device 6 in order to keep the pressure equal to, or below, this threshold value.

It is clear that the maximum pressure in chamber 1a has to keep into consideration the gas flowrate, as this value can be kept as higher as less is the required gas flowrate. Anyway, the threshold value of the pressure in chamber 1a is defined by the atmospheric pressure, in case of non-supercharged engines.

On the basis of what precedes, it is clear that the instantaneous detection of the supplied gas temperature and the determination, for each temperature value, of a correspondent gas pressure set-point close to a correspondent threshold value, allows to operate always in gaseous state in limit conditions, that means with the best efficiency without using LPG in liquid state.

On the other hand, controlling the injectors according to a directly detected feeding actual pressure and to the supplied gas actual temperature allows a precise control and adjustment of the gas flowrate fed to the engine, both during normal operation and when the injectors operate or are close to operate in subcritical conditions. During this last condition, the described assembly 2 is able to intervene on the engine control according to the pressure upstream and downstream of the injectors, to their geometric features, to the temperature and to the actual flowrate through the injectors, by reducing the pressure in the air-LPG inlet chamber and, consequently, the engine power. This is extremely important and has a particular value in the transitory following the ignition of the engine, as indicated by the progression of the variables in figure 4. In this transitory, in fact, the gas pressure increases with the temperature till a maximum value chosen during design. This maximum value is a function of the gas flowrate required by the engine and the flowrate features of the injectors.

As for all above, it is clear that the disclosed method and assembly 2 can be modified without departing from the scope defined by the claims. Particularly, curves and ratio different from the ones indicated by way of example can be used to determine the optimal maximum pressure, the gas flowrate and the pressure inside chamber 1a.

**Claims**

1. Method for feeding LPG to an internal combustion engine, the method comprising the steps of:

> - feeding a variable flow rate of LPG in gaseous state towards the engine through injectors means (4);
> - determining, in a plurality of engine operation instants, respective temperatures of the LPG fed to the injectors means (4);
> - detecting the actual pressure of the LPG in gaseous state entering said injector means (4);
> - adjusting said actual pressure so that the LPG stays in gaseous state;
> - storing a limit curve of the LPG that separates an area of gas in gaseous state from an area of gas in liquid state;

> **characterized by** also comprising the steps of:

- obtaining, for at least part of said determined temperatures, a correspondent pressure value on said limit curve;
- determining, for at least some of said determined temperatures, a pressure set-point by referring to the pressure value obtained on said curve so that the LPG stays in gaseous state;

the step of adjusting said actual pressure being carried out in such a way that said actual pressure becomes substantially equal to said pressure set-point.

2. Method according to Claim 1, **characterized in that** the determination of each of said temperatures is carried out by directly detecting a correspondent temperature of the LPG entering or inside said injectors means.

3. Method according to Claim 1, **characterized in that** the determination of each of said temperatures is carried out on the basis of the temperature of a cooling liquid of said engine at the same instant.

4. Method according to Claim 1, **characterized in that** said pressure set-point is determined by reducing said pressure value by means of a reduction factor, which is determined and is variable as a function of said determined temperature.

5. Method according to any of the previous claims, **characterized in that** said actual pressure is detected in each of said instant and the detected actual pressure is compared with the correspondent said pressure set-point; and **in that** said actual pressure is adjusted by activating selectively a first and a second solenoid valve.

6. Method according to any of the previous claims, **characterized in that**, in said instants, the LPG flow rate is controlled by varying the opening time of said injectors means at least as a function of said actual pressure.

7. Method according to claim 6, **characterized in that**, in at least some of said instants, the LPG flow rate is controlled also as a function of the ratio between the pressure in an inlet chamber for air-LPG of said engine and said actual pressure.

8. Method according to claim 7 or 6, **characterized in that** the pressure in said inlet chamber, in at least some of said instants, is limited under a threshold value, which is determined at least as a function of said actual pressure and of the LPG flow rate fed into said inlet chamber.

9. Assembly for feeding of LPG to an internal combustion engine, the assembly comprising:

- injectors means (4) to feed a variable flow rate of LPG in gaseous state to the engine (1),
- first determination means (12) to determine, in a plurality of operation instants of the engine, respective temperatures of the LPG fed to said injectors means (4),
- a pressure sensor (35) to detect the actual pressure of the LPG in gaseous state entering said injector means (4);
- adjustment means (18) to adjust said actual pressure so that the LPG stays in gaseous state;
- memory means (9) for storing a limit curve of the LPG that separates an area of gas in gaseous state from an area of gas in liquid state;

**characterized by** also comprising second determination means to determinate, for at least some of said determined temperatures, a correspondent set-point; said second determination means comprising:

- said memory means (9);
- calculation means (15) for obtaining a correspondent pressure value on said limit curve for at least part of said determined temperatures and for determining a pressure set-point by referring to the pressure value obtained on said curve so that the LPG remains in gaseous state;

said adjustment means (18) comprising control means to adjust said actual pressure in such a way that said actual pressure becomes substantially equal to said pressure set-point.

10. Assembly according to claim 9, **characterized in that** said adjustment means comprises:

- an interception valve (19) comprising:

a) an inlet (20) suitable to be connected to a LPG tank,
b) an outlet (21) suitable to be connected to the said injector means (4),

c) a first chamber (23) communicating with the said outlet (21) and with the said inlet (20),
d) a second chamber (25) separated from the said first chamber (23) by a flexible diaphragm (27), and
e) a shutter operated by the said diaphragm (27) and movable between a closing position, in which it isolates said first chamber (23) from the said inlet (20), and an opening position, in which it allows a passage of gas between the said inlet (20) and the said first chamber (23);

- a first adjustment solenoid valve (31) placed between the said inlet (20) and the said second chamber (25); and
- a second adjustment solenoid valve (32) placed between the said second chamber (25) and the said outlet (21);

said control means operating selectively the said first and second solenoid valve (31,32).

**11.** Assembly according to claim 10, **characterized in that** said control means comprise comparison means to compare, in each of the said instant, the value of the pressure of the LPG in the said outlet with the said pressure set-point and to send a signal of activation towards one or the other of the said solenoid valves according to the comparison.

**12.** Assembly according to one of the claim from 9 to 11, **characterized by** comprising:

- further determination means to determine, in at least part of the said instants, a threshold value of the pressure in an inlet chamber for air-LPG at least as a function of said actual pressure and of the flow rate of LPG fed into the said inlet chamber and limiting means to limit the pressure of the said inlet chamber under said threshold value.


**Patentansprüche**

**1.** Verfahren zum Zuführen von LPG an einen Verbrennungsmotor, wobei das Verfahren die Schritte umfasst:

- Zuführen einer variablen Durchflussmenge von LPG in gasförmigem Zustand durch eine Einspritzeinrichtung (4) hindurch in Richtung Motor;
- Bestimmen jeweiliger Temperaturen des in die Einspritzeinrichtung (4) geführten LPGs in einer Mehrzahl von Motor-Betriebszeitmomenten;
- Detektieren des Ist-Drucks des in die Einspritzeinrichtung (4) eintretenden LPGs in gasförmigem Zustand;
- Einstellen des Ist-Drucks, derart, dass das LPG im gasförmigen Zustand verbleibt;
- Speichern einer Grenzkurve des LPGs, welche einen Bereich des Gases in gasförmigem Zustand von einem Bereich des Gases in flüssigem Zustand trennt;

**dadurch gekennzeichnet, dass** dieses zudem die Schritte umfasst:

- Erhalten eines korrespondierenden Druckwerts auf der Grenzkurve für wenigstens einen Teil der bestimmten Temperaturen;
- Bestimmen eines Druck-Sollwerts für wenigstens einige der vorbestimmten Temperaturen, indem auf den auf der Kurve erhaltenen Druckwert Bezug genommen wird, so dass das LPG im gasförmigen Zustand verbleibt;

wobei der Schritt des Einstellens des Ist-Drucks in der Weise ausgeführt wird, das der Ist-Druck im Wesentlichen gleich dem Druck-Sollwert wird.

**2.** Verfahren nach Anspruch 1, **dadurch gekennzeichnet, dass** die Bestimmung jeder der Temperaturen ausgeführt wird, indem eine korrespondierende Temperatur des in die Einspritzeinrichtung eintretenden oder in dieser vorhandenen LPGs direkt detektiert wird.

**3.** Verfahren nach Anspruch 1, **dadurch gekennzeichnet, dass** die Bestimmung jeder der Temperaturen auf der Basis der Temperatur einer Kühlflüssigkeit des Motors zum gleichen Zeitmoment ausgeführt wird.

**4.** Verfahren nach Anspruch 1, **dadurch gekennzeichnet, dass** der Druck-Sollwert bestimmt wird, indem der Druckwert mittels eines Reduktionsfaktors reduziert wird, welcher als eine Funktion der bestimmten Temperatur bestimmt wird und veränderbar ist.

**5.** Verfahren nach einem der vorhergehenden Ansprüche, **dadurch gekennzeichnet, dass** der Ist-Druck zu jedem der Zeitmomente detektiert wird und der detektierte Ist-Druck mit dem korrespondierenden Druck-Sollwert verglichen wird; und dass der Ist-Druck eingestellt wird, indem selektiv ein erstes und ein zweites Elektromagnetventil aktiviert wird.

6. Verfahren nach einem der vorhergehenden Ansprüche, **dadurch gekennzeichnet, dass** zu diesen Zeitmomenten die LPG-Durchflussmenge gesteuert wird, indem die Öffnungszeit der Einspritzeinrichtung wenigstens als Funktion des Ist-Drucks variiert wird.

7. Verfahren nach Anspruch 6, **dadurch gekennzeichnet, dass** zu wenigstens einigen der Zeitmomenten die LPG-Durchflussmenge als eine Funktion des Verhältnisses zwischen dem Druck in einer Einlasskammer für Luft/LPG des Motors und des Ist-Drucks gesteuert wird.

8. Verfahren nach Anspruch 7 oder 6, **dadurch gekennzeichnet, dass** der Druck in der Einlasskammer zu wenigstens einigen der Zeitmomenten unter einem Schwellenwert begrenzt wird, welcher wenigstens als eine Funktion des Ist-Drucks und der in die Einlasskammer zugeführten LPG-Durchflussmenge bestimmt wird.

9. Anordnung zum Zuführen von LPG an einen Verbrennungsmotor, wobei die Anordnung umfasst:

   - eine Einspritzeinrichtung (4), um eine variable Durchflussmenge von LPG in gasförmigem Zustand zum Motor (1) zuzuführen,
   - eine erste Bestimmungseinrichtung (12), um in einer Mehrzahl von Betriebs-Zeitmomenten des Motors jeweilige Temperaturen des an die Einspritzeinrichtung (4) zugeführten LPGs zu bestimmen,
   - einen Drucksensor (35), um den Ist-Druck des in die Einspritzeinrichtung (4) eintretenden LPGs in gasförmigem Zustand zu detektieren;
   - eine Einstelleinrichtung (18), um den Ist-Druck einzustellen, so dass das LPG im gasförmigen Zustand verbleibt;
   - eine Speichereinrichtung (9) zum Speichern einer Grenzkurve des LPGs, welche einen Bereich des Gases in gasförmigem Zustand von einem Bereich des Gases in flüssigem Zustand trennt;

   **dadurch gekennzeichnet, dass** diese auch eine zweite Bestimmungseinrichtung umfasst, um für wenigstens einige der bestimmten Temperaturen einen korrespondierenden Sollwert zu bestimmen; wobei die zweite Bestimmungseinrichtung umfasst:

   - die Speichereinrichtung (9);
   - eine Berechnungseinrichtung (15) zum Erhalten eines korrespondierenden Druckwerts auf der Grenzkurve für wenigstens einen Teil der bestimmten Temperaturen und zum Bestimmen eines Druck-Sollwerts durch Bezugnahme auf den auf der Kurve erhaltenen Druckwert, so dass das LPG im gasförmigen Zustand verbleibt;
   - wobei die Einstelleinrichtung (18) eine Steuereinrichtung umfasst, um den Ist-Druck in der Weise einzustellen, dass der Ist-Druck im Wesentlichen gleich dem Druck-Sollwert wird.

10. Anordnung nach Anspruch 9, **dadurch gekennzeichnet, dass** die Einstelleinrichtung umfasst:

    - ein Unterbrechungsventil (19) mit:

      a) einem Einlass (20), der mit einem LPG-Tank verbunden werden kann,
      b) einem Auslass (21), der mit der Einspritzeinrichtung (4) verbunden werden kann,
      c) einer ersten Kammer (23), welche mit dem Auslass (21) und mit dem Einlass (20) kommuniziert,
      d) einer zweiten Kammer (25), welche von der ersten Kammer (23) durch eine flexible Membran (27) getrennt ist, und
      e) einer Klappe, die durch die Membran (27) betätigt wird und bewegbar ist zwischen einer Schließposition, in welcher diese die erste Kammer (23) von dem Einlass (20) isoliert, und einer Öffnungsposition, in welcher diese einen Durchgang des Gases zwischen dem Einlass (20) und der ersten Kammer (23) erlaubt,

    - einem ersten Elektromagnet-Einstellventil (31), das zwischen dem Einlass (20) und der zweiten Kammer (25) angeordnet ist; und
    - einem zweiten Elektromagnet-Einstellventil (32), das zwischen der zweiten Kammer (25) und dem Auslass (21) angeordnet ist;

    wobei die Steuereinrichtung das erste und das zweite Elektromagnetventil (31, 32) selektiv betätigt.

**11.** Anordnung nach Anspruch 10, **dadurch gekennzeichnet, dass** die Steuereinrichtung eine Vergleichseinrichtung umfasst, um zu jedem der Zeitmomente den Wert des Drucks des LPGs im Auslass mit dem Druck-Sollwert zu vergleichen und entsprechend dem Vergleich ein Aktivierungssignal in Richtung eines oder des anderen der Elektromagnetventile zu senden.

**12.** Anordnung nach einem der Ansprüche 9 bis 11, **gekennzeichnet durch**:

- eine weitere Bestimmungseinrichtung, um zu wenigstens einem Teil der Zeitmomente einen Schwellenwert des Drucks in der Einlasskammer für Luft/LPG wenigstens als Funktion des Ist-Drucks und der Durchflussmenge des in die Einlasskammer zugeführten LPGs zu bestimmen, und eine Begrenzungseinrichtung, um den Druck der Einlasskammer unter den Schwellenwert zu begrenzen.

## Revendications

**1.** Procédé pour l'envoi de GPL à un moteur à combustion interne, le procédé comprenant les étapes de :

- l'envoi au moteur d'un débit variable de GPL à l'état gazeux à travers des moyens injecteurs (4) ;
- la détermination, à une pluralité d'instants de fonctionnement du moteur, des températures respectives du GPL envoyé aux moyens injecteurs (4) ;
- la détection de la pression réelle du GPL à l'état gazeux entrant dans lesdits moyens injecteurs (4) ;
- l'ajustement de ladite pression réelle de sorte que le GPL reste à l'état gazeux ;
- la mémorisation d'une courbe limite du GPL qui sépare une zone de gaz à l'état gazeux d'une zone de gaz à l'état liquide ;

**caractérisé en ce qu'**il comprend également les étapes de :

- l'obtention, pour au moins une partie desdites températures déterminées, d'une valeur de pression correspondante sur ladite courbe limite ;
- la détermination, pour au moins certaines desdites températures déterminées, d'un point de consigne de pression en se référant à la valeur de pression obtenue sur ladite courbe de sorte que le GPL reste à l'état gazeux ;

l'étape d'ajustement de ladite pression réelle étant réalisée de telle sorte que ladite pression réelle devienne sensiblement égale audit point de consigne de pression.

**2.** Procédé selon la revendication 1, **caractérisé en ce que** la détermination de chacune desdites températures est réalisée en détectant directement une température correspondante du GPL entrant dans lesdits moyens injecteurs ou présent à l'intérieur de ceux-ci.

**3.** Procédé selon la revendication 1, **caractérisé en ce que** la détermination de chacune desdites températures est réalisée sur la base de la température d'un liquide de refroidissement dudit moteur au même instant.

**4.** Procédé selon la revendication 1, **caractérisé en ce que** ledit point de consigne de pression est déterminé en réduisant ladite valeur de pression au moyen d'un facteur de réduction, qui est déterminé et est variable en fonction de ladite température déterminée.

**5.** Procédé selon l'une quelconque des revendications précédentes, **caractérisé en ce que** ladite pression réelle est détectée à chacun desdits instants et la pression réelle détectée est comparée audit point de consigne de pression correspondant ; et **en ce que** ladite pression réelle est ajustée en activant sélectivement une première et une seconde électrovanne.

**6.** Procédé selon l'une quelconque des revendications précédentes, **caractérisé en ce que**, auxdits instants, le débit de GPL est contrôlé en faisant varier le temps d'ouverture desdits moyens injecteurs au moins en fonction de ladite pression réelle.

**7.** Procédé selon la revendication 6, **caractérisé en ce que**, à au moins certains desdits instants, le débit de GPL est contrôlé également en fonction du rapport entre la pression dans une chambre d'admission pour le mélange air-GPL dudit moteur et ladite pression réelle.

**8.** Procédé selon la revendication 7 ou 6, **caractérisé en ce que** la pression dans ladite chambre d'admission, à au moins certains desdits instants, est limitée en dessous d'une valeur seuil, qui est déterminée au moins en fonction de ladite pression réelle et du débit de GPL envoyé dans ladite chambre d'admission.

**9.** Ensemble pour l'envoi de GPL à un moteur à combustion interne, l'ensemble comprenant :

- des moyens injecteurs (4) pour envoyer au moteur (1) un débit variable de GPL à l'état gazeux,
- un premier moyen de détermination (12) pour déterminer, à une pluralité d'instants de fonctionnement du moteur, des températures respectives du GPL envoyé auxdits moyens injecteurs (4),
- un capteur de pression (35) pour détecter la pression réelle du GPL à l'état gazeux entrant dans lesdits moyens injecteurs (4) ;
- un moyen d'ajustement (18) pour ajuster ladite pression réelle de sorte que le GPL reste à l'état gazeux ;
- un moyen de mémoire (9) pour mémoriser une courbe limite du GPL qui sépare une zone de gaz à l'état gazeux d'une zone de gaz à l'état liquide ;

**caractérisé en ce qu'**il comprend en outre un second moyen de détermination pour déterminer, pour au moins certaines desdites températures déterminées, un point de consigne correspondant ; ledit second moyen de détermination comprenant :

- ledit moyen de mémoire (9) ;
- un moyen de calcul (15) pour obtenir une valeur de pression correspondante sur ladite courbe limite pour au moins une partie desdites températures déterminées et pour déterminer un point de consigne de pression en se référant à la valeur de pression obtenue sur ladite courbe de sorte que le GPL reste à l'état gazeux ;

ledit moyen d'ajustement (18) comprenant des moyens de contrôle pour ajuster ladite pression réelle de telle sorte que ladite pression réelle devienne sensiblement égale audit point de consigne de pression.

**10.** Ensemble selon la revendication 9, **caractérisé en ce que** ledit moyen d'ajustement comprend :

- une soupape d'interception (19) comprenant :

a) une entrée (20) adaptée pour être reliée à un réservoir de GPL,
b) une sortie (21) adaptée pour être reliée auxdits moyens injecteurs (4),
c) une première chambre (23) communiquant avec ladite sortie (21) et avec ladite entrée (20),
d) une seconde chambre (25) séparée de ladite première chambre (23) par un diaphragme flexible (27), et
e) un clapet actionné par ledit diaphragme (27) et déplaçable entre une position de fermeture, dans laquelle il isole ladite première chambre (23) de ladite entrée (20), et une position d'ouverture, dans laquelle il permet un passage de gaz entre ladite entrée (20) et ladite première chambre (23) ;

- une première électrovanne d'ajustement (31) placée entre ladite entrée (20) et ladite seconde chambre (25) ; et
- une seconde électrovanne d'ajustement (32) placée entre ladite seconde chambre (25) et ladite sortie (21) ;

lesdits moyens de contrôle actionnant sélectivement lesdites première et seconde électrovannes (31,32).

**11.** Ensemble selon la revendication 10, **caractérisé en ce que** lesdits moyens de contrôle comprennent des moyens de comparaison pour comparer, à chacun desdits instants, la valeur de la pression du GPL dans ladite sortie audit point de consigne de pression et pour envoyer un signal d'activation vers l'une ou l'autre desdites électrovannes en fonction de la comparaison.

**12.** Ensemble selon l'une des revendications 9 à 11, **caractérisé en ce qu'**il comprend :

- d'autres moyens de détermination pour déterminer, à au moins une partie desdits instants, une valeur seuil de la pression dans une chambre d'admission pour le mélange air-GPL au moins en fonction de ladite pression réelle et du débit de GPL envoyé dans ladite chambre d'admission et des moyens limiteurs pour limiter la pression de ladite chambre d'admission en dessous de ladite valeur seuil.

Fig.1

Fig.2

Fig.3

Fig.4

Fig.5

**EP 1 849 988 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0159537 A1
- JP 20032397875 B